# EUROPÄISCHE PATENTANMELDUNG

(11) **EP 1 672 381 A1**
(43) Veröffentlichungstag der Anmeldung: **21.06.2006**
(21) Anmeldenummer: 04030192.1
(22) Anmeldetag: 20.12.2004
(51) Int. Cl.: G01S 7/40, G01S 7/35, G01S 13/34, H03B 23/00

(54) **Frequenzmodulierendes Dauerstrich-Radarsystem für Automatisierungskomponenten einer technischen Anlage**

(71) Anmelder: SIEMENS AKTIENGESELLSCHAFT, 80333 München (DE)
(72) Erfinder: Gila, Janos, Dr., 2340 Mödling (AT); Konrad, Wolfgang, Dr., 2340 Mödling (AT)

(57) **Zusammenfassung**

Die Erfindung betrifft einen elektronischen Schaltkreis für ein frequenzmodulierendes Dauerstrich-Radarsystem, welches bevorzugt zur Lokalisierung eines mobilen Bedien- und Beobachtungsgeräts für die Automatisierungskomponenten einer technischen Anlage ausgebildet ist. Das frequenzmodulierende Dauerstrich-Radarsystem verfügt über ein Oszillatormodul zur Erzeugung eines annähernd linear frequenzmodulierten Signals, ein Treibermodul zur Ansteuerung des Oszillatormoduls und einen phasengekoppelten Regelkreis zur Kalibrierung des Treibermoduls. Das frequenzmodulierende Dauerstrich-Radarsystem kann wahlweise in einem Kalibrier- oder normalen Betriebsmodus betrieben werden. Im Kalibriermodus kann z.B. das Treibermodul auf vorgegebene Eckfrequenzen und Rampenzeiten des linear frequenzmodulierten Ausgangssignals des Oszillatormoduls abgestimmt werden. Zudem kann eine Sequenz von Ansteuersignalen für das Oszillatormodul ermittelt und abgespeichert werden, die, wenn sie in das Oszillatormodul eingespeist werden, ein annähernd linear frequenzmoduliertes Signal am Ausgang des Oszillatormoduls erzeugen. Somit können Oszillatormodule mit einem nichtlinearen Verhalten zur Erzeugung eines linear frequenzmodulierten Signals kosteneffektiv eingesetzt werden.

## Beschreibung

Die Erfindung betrifft ein frequenzmodulierendes Dauerstrich Radarsystem mit Mitteln zur Erzeugung annähernd linear frequenzmodulierter Signale zur Lokalisierung eines mobilen Bedien- und Beobachtungsgeräts, welches zur Steuerung von Automatisierungskomponenten einer technischen Anlage vorgesehen ist.

Radarsysteme können vielfach zur berührungslosen Geschwindigkeitsmessung aber auch zur berührungslosen Lokalisierung und Entfernungsmessung zwischen Objekten eingesetzt werden. Z.B. kann ein Radarsystem zur Abstandsmessung eines mobilen Bedien- und Beobachtungsgerät für Automatisierungskomponenten einer technischen Anlage genutzt werden. So können vom Radarsystem Abfragesignale gesendet werden, die von Transpondervorrichtungen, die sich an bestimmten Referenzpunkten befinden, moduliert und als Funkantwortsignale, gegebenenfalls sogar mit Verstärkung, reflektiert werden. Somit kann prinzipiell eine zuverlässige Abstandsbestimmung zwischen dem mobilen Bedien- und Beobachtungsgerät und der technischen Anlage erfolgen.

Für eine solche Abstandsbestimmung kann z.B. ein frequenzmoduliertes Dauerstrich-Radarsystem, auch als Frequency Modulated Continous Way (FMCW) System, eingesetzt werden. Ein solches Radarsystem ermöglicht eine Abstandsbestimmung zu einem reflektierenden Objekt, vorzugsweise einem Transponder, unter Verwendung von kontinuierlicher, d.h. nicht gepulster continuous wave (cw) Radarstrahlung. Bei diesem Prinzip unterliegt die Frequenz ausgesendeter Radarsignale einer periodischen Modulation.

Aufgrund dieser kontinuierlichen Änderung der Sendefrequenz des Radarsignals, weisen ausgesendete und vom Objekt reflektierte Radarsignale eine Frequenzverschiebung auf, die einem Laufzeitunterschied entspricht. Dieser Laufzeitunterschied spiegelt z.B. den zweifachen Abstand zwischen dem Radarsystem und dem reflektierenden Objekt, d.h. dem Transponder, wieder. Mit Hilfe des FMCW-Prinzips kann somit der Abstand zwischen stationären Objekten mit Hilfe von kontinuierlicher Radarstrahlung zuverlässig bestimmt werden.

Beim FMCW Radar verläuft die Modulation der Frequenz des Sendesignals vorzugsweise dreieckförmig, d.h. die Frequenz des Sendesignals ändert sich linear von einem minimalen Frequenzwert bis zu einem maximalen Frequenzwert mit der Zeit. Die zur Durchlaufen vom minimalen bis zum maximalen Frequenzwert benötigte Zeit wird nachfolgend als Rampenzeit bezeichnet. Für die Genauigkeit der Abstandsbestimmung und die Zuverlässigkeit der Auswertung von vom Transponder empfangene Funkantwortsignal ist eine genaue Einhaltung der vordefinierten Eckfrequenzen, d.h. der minimalen und maximalen Frequenzen des Sendesignals sowie eine exakte Einhaltung der Rampenzeit erforderlich. Zudem hängt die Auswertung der Funkantwortsignale und die Genauigkeit der daraus resultierenden Abstandsbestimmung in hohem Maße von der Linearität der Frequenzmodulation des Sendesignals ab.

Üblicherweise wird zur Erzeugung eines frequenzmodulierten Sendesignals ein spannungskontrollierter Oszillator oder Voltage Controlled Oscillator (VCO) verwendet, der von einem Nachlaufsynchronisationsmodul angesteuert wird. Solche Nachlaufsynchronisationsmodule, auch als Phase-Locked-Loop (PLL) bezeichnet, müssen hierfür während des Durchlaufs einer Frequenzrampe mehrfach neu programmiert werden. Typischerweise erfordert diese Art der Erzeugung eines frequenzmodulierten Sendesignals 100 bis 200 Programmierungen des PLL Moduls während des Durchlaufens einer Frequenzrampe.

Liegt die Rampenzeit z.B. im Bereich von ms, so sind für die Programmierung des PLL Moduls leistungsfähige und kostenintensive Mikro-Controller oder andere applikationsspezifische, integrierte Schaltkreise (ASIC), mit erhöhten Platzbedarf notwendig.

Der Erfindung liegt somit die Aufgabe zu Grunde, ein FMCW Radarsystem derart weiterzugestalten, dass zur Erzeugung annähernd lineare frequenzmodulierte Sendesignale eine aktive Programmierung eines PLL Moduls nicht mehr notwendig ist.

Die Aufgabe wird mit dem in Anspruch 1 angegebenen elektronischen Schaltkreis sowie mit dem in Anspruch 8 bezeichneten mobilen Bedien- und Beobachtungsgerät und mit dem in Anspruch 12 angegebenen HMI System gelöst. Weitere vorteilhafte Ausführungen der Erfindung sind in den Unteransprüchen angegeben.

Die Erfindung verfügt über einen elektronischen Schaltkreis zur Erzeugung eines annähernd linear frequenzmodulierten Signals für ein frequenzmodulierendes Dauerstrich-Radarsystem, insbesondere für ein Short-Range Dauerstrich Radarsystem. Der elektronische Schaltkreis hat ein Oszillatormodul zur Erzeugung des annähernd linear frequenzmodulierten Signals, ein Treibermodul zur Ansteuerung des Oszillatormoduls sowie einen phasengekoppelten Regelkreis zur Kalibrierung des Treibermoduls. Das annähernd linear frequenzmodulierte Signal ist vorzugsweise als ein dreieckförmiges oder sägezahnförmiges Signal in einer Frequenz-Zeitdarstellung ausgebildet. Annähernd linear bedeutet in diesem Zusammenhang, dass sich die Frequenz des erzeugten Signals linear mit der Zeit ändert. Die maximalen und minimalen Frequenzen des erzeugten Signals stellen die sogenannten Eckfrequenzen dar, die jeweils nach Ablauf der Rampenzeit erreicht werden.

Das Oszillator-Modul ist vorzugsweise als ein spannungskontrollierter Oszillator (VCO) implementiert, der von einem Treibermodul angesteuert wird. Das Treibermodul ist hierbei nicht mit Hilfe eines Nachlaufsynchronisationsmoduls oder einer Phase Locked Lube (PLL) ausgestattet, sondern kann mit Hilfe eines frei laufenden Funktionsgenerators oder sogar mit Hilfe eines Kontrollmoduls, wie z.B. einem Mikro-Controller direkt realisiert werden. Der Ausgang des Treibermoduls wird vorzugsweise direkt in das Oszillatormodul eingespeist. Während der Erzeugung einer Frequenzrampe durch das Oszillatormodul erfolgt hierbei keinerlei Programmierung oder Veränderung im Treibermodul. Ein phasengekoppelter Regelkreis dient lediglich der Kalibrierung des Treibermoduls und wenn dieses mittels einer Kalibrierungsprozedur hinsichtlich erforderlicher Parameter hinreichend kalibriert ist, wird das Oszillatormodul mit Hilfe des Treibermoduls ohne jegliche Nachlaufsynchronisation oder ähnlicher Regelverfahren betrieben.

Der erfindungsgemäße elektronische Schaltkreis erfordert daher keine permanente Neuberechnung oder Neuprogrammierung eines Ansteuermoduls für den Oszillator. Folglich ermöglicht der erfindungsgemäße elektronische Schaltkreis die Erzeugung eines annähernd linear frequenzmodulierten Signals unter Verzicht auf Komponenten zur permanenten Neuprogrammierung des Treibermoduls. Dies ermöglicht eine kosten- und platzeinsparende Realisierung eines derartigen elektronischen Schaltkreises.

Bei einer weiteren Ausführungsform der Erfindung verfügt das Treibermodul über einen Funktionsgenerator, der mittels eines regelbaren digitalen Potentiometers über den phasengekoppelten Regelkreis einstellbar ist. Der Funktionsgenerator des Treibermoduls liefert z.B. eine Dreiecks- oder Sägezahnspannung, die vom Oszillatormodul in ein entsprechend geartetes frequenzmoduliertes Signal übertragen wird. Vorzugsweise ist hierbei das Oszillatormodul als ein spannungskontrollierter Oszillator mit einer möglichst linearen Kennlinie ausgebildet. Die Einstellung des Treibermoduls wird hierbei mit Hilfe des regelbaren digitalen Potentiometers durchgeführt.

Der phasengekoppelte Regelkreis kann z. B. als PLL Modul ausgebildet sein und ermöglicht die Erzeugung eines Steuer- oder Kontrollsignals, welches der Bestimmung der Solleckfrequenzen des VCO dient. Das Kontrollsignal kann von einem Kontrollmodul, wie z.B. einem Mikro-Controller, ausgewertet und zum Einstellen des digitalen Potentiometers und letztlich zur Kalibrierung des Treibermoduls verwendet werden.

Bei einer weiteren Ausführungsform der Erfindung ist das digitale Potentiometer dazu ausgebildet, die Rampenzeit sowie die maximalen und minimalen Amplitudenwerte des Funktionsgenerators einzustellen. Mit Hilfe des digitalen Potentiometers ist es daher möglich, den Funktionsgenerator derart zu kalibrieren, dass zumindest die minimale und die maximale Frequenz des annähernd linear frequenzmodulierten Signals sowie die Rampenzeit des annähernd linear frequenzmodulierten Signals exakt eingestellt werden können.

Liefert das Oszillatormodul ein annähernd linear verlaufendes frequenzmoduliertes Signal, so kann mit Hilfe des Funktionsgenerators und des digitalen Potentiometers das erforderliche frequenzmodulierte Sendesignal mit hinreichender Präzision universell eingestellt und erzeugt werden.

Bei einer weiteren Ausführungsform der Erfindung verfügt das Treibermodul über Mittel zur Ermittlung und Speicherung mindestens einer Sequenz von Ansteuersignalen für das Oszillatormodul, um am Ausgang des Oszillatormoduls das annähernd linear frequenzmodulierte Signal zu erzeugen. Ferner verfügt das Treibermodul über Mittel zum Ansteuern des Oszillatormoduls mit der mindestens einen Sequenz von Ansteuersignalen. Bei dieser Ausführungsform kann das Oszillatormodul im Gegensatz zu den beschriebenen Ausführungsformen auch ein nichtlineares Verhalten zwischen Amplitude eines Eingangssignals und der Frequenz eines Ausgangssignals aufweisen.

Oszillatormodule oder spannungskontrollierte Oszillatoren mit einer nichtlinearen Kennlinie sind erheblich kostengünstiger als Oszillatormodule mit einem linearen Verhalten zwischen Eingangsamplitude und Ausgangsfrequenz. Die Sequenz von Ansteuersignalen entspricht typischerweise einer Sequenz von Spannungswerten, die am Ausgang des Oszillatormoduls ein annähernd linear frequenzmoduliertes Signal erzeugen, wenn sie in äquidistanten Zeitabständen in den Eingang des Oszillatormoduls eingespeist werden. Diese Sequenz von Ansteuersignalen kompensiert somit die Nichtlinearität des Oszillatormoduls. Die Spannungswerte der Sequenz von Ansteuersignalen werden typischerweise während einer Kalibrierungsprozedur ermittelt und abgespeichert.

Diese Kalibrierungsprozedur wird typischerweise vor Inbetriebnahme des elektronischen Schaltkreises durchgeführt. Beim Normalbetrieb des elektronischen Schaltkreises wird diese ermittelte Sequenz von Ansteuersignalen wiederholt zur Erzeugung der erforderlichen Sequenzrampen ausgelesen und in das Oszillatormodul eingespeist. Eine Sequenz von Ansteuersignalen entspricht typischerweise einer kompletten Periode des zu erzeugenden frequenzmodulierten Signals. Weist das vom Oszillatormodul erzeugte frequenzmodulierte Signal eine zeitliche Symmetrie, wie beispielsweise bei einem dreieckförmigen Signal auf, so genügt es, eine einzige ansteigende oder absteigende Rampe des linear frequenzmodulierten Signals in Form einer Sequenz von Ansteuersignalen abzuspeichern. In diesem Fall können aufeinander folgende ansteigende und absteigende Rampen des annähernd linear frequenzmodulierten Signals durch ein entsprechendes aufsteigendes oder absteigendes Ausleseverfahren der Sequenz von Ansteuersignalen erzeugt werden.

Bei einer weiteren Ausführungsform der Erfindung sind die Mittel zur Speicherung der mindestens einen Sequenz von Ansteuersignalen als digitales Speichermedium ausgebildet und das Treibermodul verfügt über Mittel zur Analog- DigitalWandlung sowie Mittel zur Digital-Analog-Wandlung. Die Analog-Digital-Wandlung wird hierbei zum Übersetzen analoger Spannungssignale in entsprechende digitale Spannungssignale während einer Kalibrierungsprozedur verwendet, während die Digital-Analog-Wandlung zum Auslesen des digitalen Speichermediums und zum Übersetzen der digitalen Werte in eine analoge Spannung benötigt werden, um das Oszillatormodul mit der erforderlichen analogen Spannung anzusteuern. Das digitale Speichermedium kann z.B. durch einen Look-Up Table (LUT) realisiert werden, der eine Zuordnung zwischen Spannungswerten und Frequenzen oder Zeitpunkten innerhalb des Rampenintervalls ermöglicht.

Bei einer weiteren Ausführungsform der Erfindung ist der phasengekoppelte Regelkreis zu einer ersten Kalibrierung vor Inbetriebnahme des elektronischen Schaltkreises oder zu einer zeitweiligen Nachregelung des Treibermoduls im laufenden Betrieb vorgesehen. Typischerweise wird eine erste Kalibrierung stets vor Fertigstellung oder vor Inbetriebnahme des elektronischen Schaltkreises durchgeführt, um entweder das regelbare digitale Potentiometer entsprechend den Erfordernissen einzustellen oder um eine Sequenz von Ansteuersignalen für das Oszillatormodul zu ermitteln und abzuspeichern.

Während des Betriebs des elektronischen Schaltkreises können relevante Umgebungsparameter, wie z.B. Temperatur, einer starken Veränderung unterliegen, was zu einer signifikanten Änderungen oder einer Drift das annähernd linear frequenzmodulierten Signals führen kann. Um derartige Änderungen effektiv ausgleichen zu können, ist eine zeitweilige Nachregelung des Treibermoduls im laufenden Betrieb vorgesehen. Diese Nachregelung entspricht z.B. einer erneuten Kalibrierung des Treibermoduls mit den bereits erwähnten Mitteln. Diese Nachregelung kann entweder manuell gestartet oder automatisch, z.B. in vordefinierten Zeitintervallen durchgeführt werden.

Bei einer weiteren Ausführungsform der Erfindung verfügt der elektronische Schaltkreis über mindestens ein Schaltelement, welches zum Umschalten des elektronischen Schaltkreises zwischen einem normalen Betriebsmodus und einem Kalibrierungsmodus ausgebildet ist. Somit kann mit einem oder einigen wenigen Schaltelementen der elektronische Schaltkreis wahlweise in zwei verschiedenen Betriebsmodi entweder zum Erzeugen des linear frequenzmodulierten Signals oder zum Kalibrieren des Treibermoduls betrieben werden. Vorzugsweise ist das mindestens eine Schaltelement mit Hilfe eines zentralen Kontrollmoduls ansteuerbar, so dass das Schalten zwischen den beiden Betriebsmodi unabhängig von einem Benutzer autonom durch das zentrale Kontrollmodul selbst vorgenommen werden kann.

In einem weiteren Aspekt beschreibt die Erfindung ein mobiles Bedien- und Beobachtungsgerät für Automatisierungskomponenten einer technischen Anlage. Das mobile Bedien- und Beobachtungsgerät ist mit einem frequenzmodulierenden Dauerstrich-Radarsystem zu seiner Lokalisierung ausgebildet, wobei das frequenzmodulierende Dauerstrich-Radarsystem ein Oszillatormodul zur Erzeugung eines annähernd linear frequenzmodulierten Signals, ein Treibermodul zur Ansteuerung des Oszillatormoduls und ein phasengekoppelten Regelkreis zur Kalibrierung des Treibermoduls hat.

Als technische Anlage kommen hier alle Arten von technischen Geräten und Systemen sowohl in Einzelanordnung als auch in datentechnischer Vernetzung z.B. über einen Feldbus in Frage. Bei industriellen Anwendungen fallen darunter einzelne Betriebsmittel, z.B. Antriebe und Bearbeitungsmaschinen. Eine technische Anlage kann aber auch eine Produktionsanlage sein, bei der mit lokal verteilten Betriebsmitteln ein gesamter technischer Prozess betrieben wird, z.B. eine chemische Anlage oder Fertigungsstraße. Technische Anlagen werden mit speziellen digitalen Datenverarbeitungssystemen, auch Automatisierungskomponenten genannt, gesteuert und bedient. In einem solchen System sind einerseits zur direkten Steuerung der technischen Anlage dienende Komponenten vorhanden, d.h. speicherprogrammierbare Steuerungen SPS, auch als "PLC - Programmable Logic Controller" bezeichnet.

Das mobile Bedien- und Beobachtungsgerät stellt eine Schnittstelle zwischen einer Steuerung einer Anlage und dem Bedienpersonal dar. Solche Geräte Mensch-Maschine werden auch als Geräte zum "Bedienen- und Beobachten", abgekürzt "B+B", oder als HMI Geräte, d.h. Human Machine Interface, bezeichnet.

Der Begriff HMI Gerät ist ein Oberbegriff und umfasst alle zu dieser Gruppe von Geräten gehörigen Komponenten. Als ein Beispiel sollen "Operator Panels ", auch als "Bedienpanels" bzw. kurz als "OP" bezeichnet, genannt werden. HMI Geräte dienen in einer vernetzten Automatisierung als Hilfsmittel für Bedienpersonal, um Prozessdaten der zu steuernden technischen Anlage anzeigen oder bedienen zu können. Diese Funktion wird mit "Supervisor Control and Data Akquisition"(SCADA) bezeichnet. Hierzu ist das HMI Gerät in der Regel hardwaremäßig speziell aufgebaut, d.h. es verfügt z.B. über einen Touchscreen und ist gegen Umwelteinflüsse besonders abgeschirmt. Weiterhin wird darin eine spezielle Software ausgeführt. Diese stellt Funktionen bereit, womit Komfort, Qualität und Sicherheit einer Bedienung durch eine Bedienperson verbessert. So können über HMI Geräte z.B. interaktive Prozessabbilder der zu bedienenden technischen Anlage visualisiert, bedient, projektiert und generiert werden. Hiermit ist einerseits eine selektive Anzeige von Reaktionen der technischen Anlage möglich, meist in Form von Messwerten und Meldungen. Andererseits wird es durch gezielte Vorgabe von Bedienhandlungen und Dateneingaben ermöglicht, die technische Anlage in gewünschte Zustände zu überführen.

Bei einer weiteren Ausführungsform der Erfindung verfügt das Treibermodul des Radarsystems des mobilen Bedien- und Beobachtungsgeräts über einen Funktionsgenerator, der mittels eines regelbaren digitalen Potentiometers über den phasengekoppelten Regelkreis einstellbar ist. Hierbei ist das digitale Potentiometer zumindest dazu ausgebildet, die Rampenzeit und die maximalen und minimalen Amplitudenwerte des Funktionsgenerators einzustellen und zu regeln.

Bei einer weiteren Ausführungsform der Erfindung weist das Oszillatormodul des Radarsystems des mobilen Bedien- und Beobachtungsgeräts ein nichtlineares Verhalten zwischen der Amplitude eines Eingangssignals und der Frequenz des Ausgangssignals auf. Bei dieser Ausführungsform verfügt das Treibermodul ferner über Mittel zur Ermittlung und Speicherung mindestens einer Sequenz von Ansteuersignalen für das Oszillatormodul, um am Ausgang des Oszillatormoduls ein annähernd linear frequenzmoduliertes Signal zu erzeugen. Zusätzlich verfügt das Treibermodul über Mittel zum Ansteuern des Oszillatormoduls mit der mindestens einen Sequenz von Ansteuersignalen, die als analoge Spannungswerte in das Oszillatormodul eingespeist werden können.

Bei einer weiteren Ausführungsform verfügt das mobile Bedienund Beobachtungsgerät über Mittel zur berührungslosen Datenübertragung zwischen dem mobilen Bedien- und Beobachtungsgerät und den Automatisierungskomponenten sowie über Auswertemittel zur Verwaltung eines aktiven Bedienbereichs, welcher die Automatisierungskomponenten für sicherheitsrelevante Bedienungen der technischen Anlage über das mobile Bedien- und Beobachtungsgerät nur dann aktivieren, wenn das Radarsystem detektiert, dass sich das mobile Bedien- und Beobachtungsgerät innerhalb des aktiven Bereichs befindet. Auf diese Art und Weise kann mit Hilfe des Radarsystems der aktive Bedienbereich der technischen Anlage präzise verwaltet werden und sicherheitsrelevante Funktionen der technischen Anlage abhängig von der Position des mobilen Bedien- und Beobachtungsgeräts freigegeben oder gesperrt werden.

Gemäß eines weiteren Aspekts beschreibt die Erfindung ein HMI System mit zumindest einem mobilen Bedien- und Beobachtungsgerät für die Automatisierungskomponenten einer technischen Anlage und mit einem frequenzmodulierenden Dauerstrich-Radarsystem zur Lokalisierung des mobilen Bedien- und Beobachtungsgeräts. Hierbei ist das frequenzmodulierende Dauerstrich-Radarsystem mit einem Oszillatormodul zur Erzeugung eines annähernd linear frequenzmodulierten Signals, einem Treibermodul zur Ansteuerung des Oszillatormoduls und einem phasengekoppelten Regelkreis zur Kalibrierung des Treibermoduls ausgestattet. Das Radarsystem muss hierbei nicht notwendiger Weise im mobilen Bedien- und Beobachtungsgerät integriert sein. Alternativ, können die Mittel zur Erzeugung des annähernd linear frequenzmodulierten Signals auch mit Hilfe des Automatisierungskomponenten oder direkt an der technischen Anlage implementiert sein.

Bevorzugte Ausführungsformen der Erfindung werden nachfolgend anhand der Zeichnungen näher erläutert. Es zeigen:
- Figur 1: ein Blockdiagramm des erfindungsgemäßen elektronischen Schaltkreises,
- Figur 2: ein Blockdiagramm des elektronischen Schaltkrei ses zur Ermittlung und Speicherung einer Ansteuersequenz,
- Figur 3: ein schematisches Blockdiagramm des erfindungsgemäßen HMI Systems,
- Figur 4: ein detailliertes Blockdiagramm eines im Lokalisierungsmodul integrierten elektronischen Schaltkreises,
- Figur 5: Amplituden und Frequenzdiagramme der Eingangs-und Ausgangssignale des Oszillatormoduls.

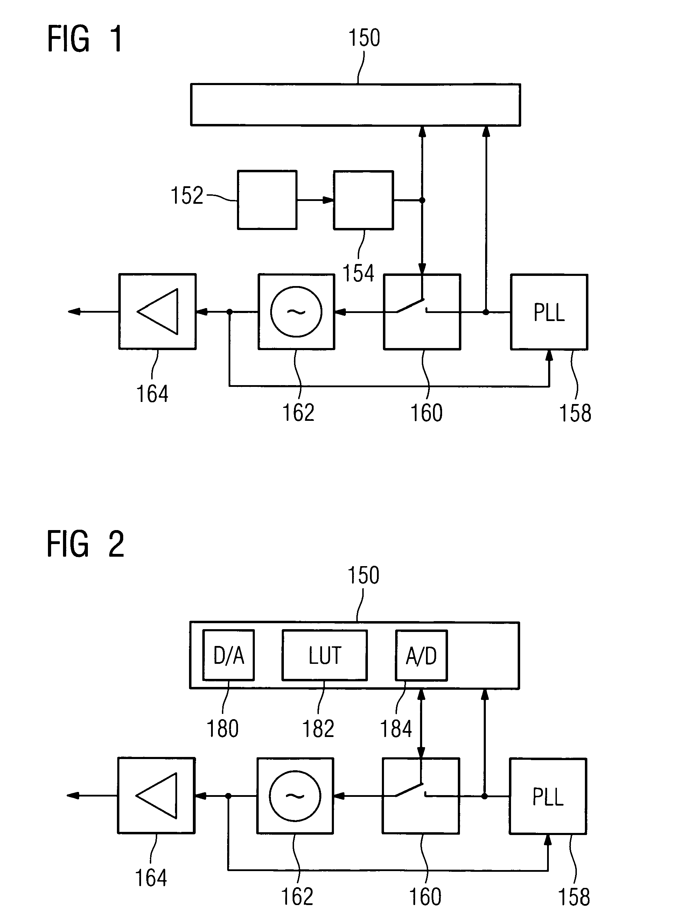

Figur 1 zeigt ein Blockdiagramm des erfindungsgemäßen elektronischen Schaltkreises zur Erzeugung des annähernd linear frequenzmodulierten Signals. Der Schaltkreis verfügt über ein zentrales Kontrollmodul 150, ein digitales Potentiometer 152, einen Funktionsgenerator 154, ein PLL Modul 158, einen Schalter 160, einen spannungskontrollierten Oszillator 162 sowie einen Verstärker 164.

Der spannungskontrollierte Oszillator 162, auch als Voltage Controlled Oscillator (VCO) bezeichnet, wird über den Schalter 160 vom Frequenzgenerator 154 angesteuert und erzeugt das Sende- und Lokaloszillator-Signal. Abhängig von seiner Eingangsspannung erzeugt der spannungskontrollierte Oszillator 162 ein Ausgangssignal variierender Frequenz. Typischerweise liegt das vom spannungskontrollierten Oszillator 162 erzeugte Signal im GHz-Bereich. Z.B. erzeugt der spannungskontrollierte Oszillator 162 Ausgangssignale innerhalb des ISM-Bandes bei einer Mittenfrequenz um 2,4 GHz. Das vom spannungskontrollierten Oszillator 162 erzeugte RF-Signal weist typischerweise einen Frequenzhub im Bereich einiger 10 MHz auf bei einer Rampenzeit im ms-Bereich.

Das erzeugte frequenzmodulierte RF-Signal wird vorzugsweise mit Hilfe des Verstärkers 164 auf einen notwendigen Pegel verstärkt und schließlich an eine Sende- und Empfangsantenne übermittelt. Von dort wird das RF-Signal über eine Funkstrecke gesendet.

Das digitale Potentiometer 152 ist über das zentrale Kontrollmodul 150 einstellbar und dient der Kalibrierung des Funktionsgenerators 154. Der Funktionsgenerator erzeugt z.B. eine Sägezahnspannung oder eine dreieckförmige Spannung, deren Umkehrpunkte, d.h. minimale und maximale Spannungssignale über das Potentiometer 152 einstellbar sind. Weiterhin kann mit Hilfe des digitalen Potentiometers 152 die Rampenzeit des Funktionsgenerators 154 in erforderlicher Weise eingestellt werden.

Mit Hilfe des Schalters 160 kann der elektronische Schaltkreis wahlweise in einem normalen Betriebsmodus oder in einem Kalibrierungsmodus betrieben werden. Bei der in Figur 1 gezeigten Schalterstellung befindet sich der Schaltkreis im normalen Betriebsmodus zur Erzeugung annähernd linearer frequenzmodulierter Signale. Wird der Schalter 160 in die nicht dargestellte Stellung gebracht, so wird das PLL Modul 158 mit den VCO 162 verbunden. Das PLL Modul 158, der VCO 162 und die vom Ausgang des VCOs rückführende Zuleitung in das PLL Modul stellen einen phasengekoppelten Regelkreis zur Kalibrierung des elektronischen Schaltkreises dar.

Im Kalibriermodus kann z.B. mit Hilfe des PLL Moduls 158 die minimale Frequenz für das Ausgangssignal des VCO 162 eingestellt werden. Liefert der VCO 162 jene vorgegebene minimale Frequenz, so kann das resultierende Eingangssignal, d.h. die Steuerspannung des VCO 162 zur Kalibrierung des Frequenzgenerators 154 genutzt werden. Die Ermittlung dieses Eingangssignals sowie die entsprechende Regelung des digitalen Potentiometers erfolgt mit Hilfe des zentralen Kontrollmoduls 150. In entsprechender Weise kann der phasengekoppelte Regelkreis auch zur Kalibrierung des maximalen Spannungswerts des Funktionsgenerators 154 verwendet werden.

Zur übersichtlichen Darstellung wurde in Figur 1 auf eine Darstellung von Zuleitungen vom digitalen Potentiometer 152 und vom PLL Modul 158 zum zentralen Kontrollmodul 150 verzichtet. Im Kalibriermodus erlauben diese, nicht explizit dargestellten Zuleitungen eine Auswertung von Signalen des PLL Moduls 158 und ein autonomes Einstellen des digitalen Potentiometers 152.

Die Rampenzeit des Funktionsgenerators 154 wird vorzugsweise gänzlich mit Hilfe des zentralen Kontrollmoduls 150 überprüft und ggf. über das digitale Potentiometer 152 nachgeregelt.

Das in Figur 1 dargestellte Ausführungsbeispiel ist in besonderem Maße für spannungskontrollierte Oszillatoren 162 geeignet, die ein nahezu lineares Verhalten zeigen. Es können prinzipiell eine Vielzahl von preiswerten VCOs 162 verwendet werden, wobei die Eckfrequenzen und die Rampenzeit des frequenzmodulierten Ausgangssignals des VCOs 162 den Erfordernissen entsprechend kalibriert und nachgeregelt werden können. VCOs 162 mit einer stark nichtlinearen Kennlinie führen in diesem Ausführungsbeispiel zu einem nicht wünschenswerten nichtlinearen frequenzmodulierenden Ausgangssignal des spannungskontrollierten Oszillators 162.

Figur 2 zeigt eine alternative Ausführungsform des elektronischen Schaltkreises, bei der das Treibermodul vollständig im zentralen Kontrollmodul 150 integriert ist. Das Kontrollmodul 150 verfügt hierbei über ein digitales Speichermedium 182, welches z.B. als Look-Up Table ausgebildet sein kann. Ferner hat das Kontrollmodul 150 einen Digital-Analog-Wandler 180 und einen Analog-Digital-Wandler 184. Der Schalter 160 ermöglicht, wie in der in Figur 1 gezeigten Ausführungsform ein Schalten zwischen einem Kalibrierungs- und einem normalen Betriebsmodus des elektronischen Schaltkreises. Der phasengekoppelte Regelkreis, bestehend aus dem PLL Modul 158 und dem spannungskontrollierten Oszillator 162 mitsamt der Rückkopplung des Ausgangssignals des VCO 162 an das PLL Modul, ermöglicht eine genaue Einstellung der Frequenz des Ausgangssignals des VCO 162.

Im Kalibrierungsmodus kann somit jede gewünschte Frequenz der Frequenzrampe mit Hilfe des PLL Moduls gezielt eingestellt werden und das dazugehörige Spannungseingangssignal für das VCO Modul 162 kann mit Hilfe des Analog-Digital-Wandlers 184 in einen digitalen Wert umgesetzt und im Speichermedium 182 einer Frequenz oder einem Zeitpunkt zugeordnet abgespeichert werden. Typischerweise werden sämtliche einzelne Frequenzen der Frequenzrampe individuell eines zur Ansteuerung des VCO erforderlichen Spannungswerts zugeordnet.

Das Abspeichern einer solchen Sequenz von Ansteuersignalen für den VCO 162 hat den Vorteil, dass ein nichtlineares Verhalten des spannungskontrollierten Oszillators 162 exakt ausgeglichen werden kann. Ist eine Ansteuersequenz einmal im Kalibriermodus ermittelt und im Look-Up Table 182 abgespeichert, so können im normalen Betriebsmodus die Ansteuersequenzen aus dem Look-Up Table 182 ausgelesen und mit Hilfe des Digital-Analog-Wandlers in ein analoges Spannungssignal umgewandelt werden, welches dann in den VCO 162 eingespeist wird.

Da die Ansteuersequenz im Hinblick auf ein linear frequenzmoduliertes Ausgangssignal das VCO 162 erzeugt wurde, wird auch im normalen Betriebsmodus, d.h. wenn der VCO mit den Ansteuersequenzen betrieben wird, dass Ausgangssignal des spannungskontrollierten Oszillators 162 eine hinreichend lineare Rampe aufweisen. Da in diesem Ausführungsbeispiel ein nichtlineares Verhalten eines VCO ausgeglichen werden kann, können somit sehr preiswerte und kostengünstige spannungskontrollierte Oszillatoren im Schaltkreis implementiert werden.

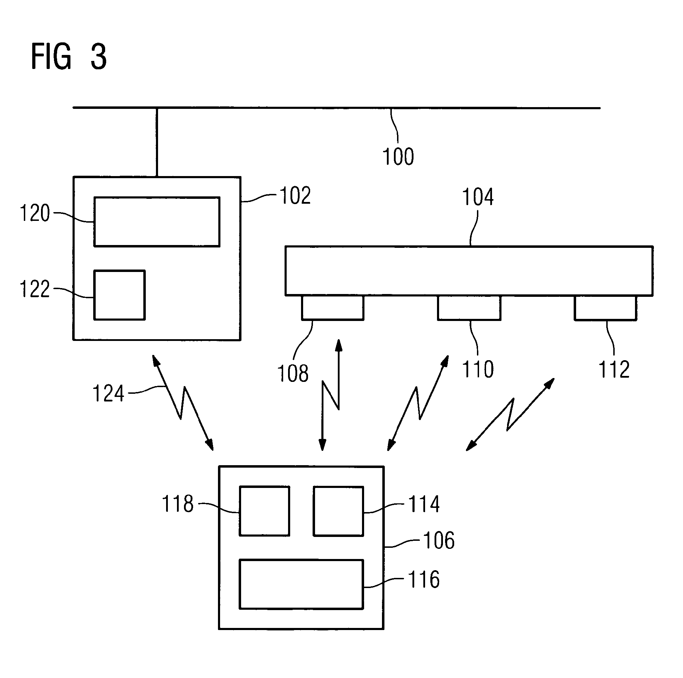

Figur 3 zeigt beispielhaft eine technische Anlage 104 mit technischen Betriebsmitteln für die das erfindungsgemäße Radarsystem eingesetzt werden kann. Die technischen Betriebsmittel sind z.B. Bestandteil einer fertigungs- oder prozesstechnischen Vorrichtung. Zu deren Steuerung sind Automatisierungskomponenten 102 vorhanden, die auf die technischen Betriebsmittel, insbesondere durch Vermittlung von Messwertgebern, Stellungsreglern und verschiedenen anderen sogenannten "Process Instruments" eingreifen. Die Automatisierungskomponenten 102 verfügen beispielhaft über ein Automatisierungsgerät, wie z.B. eine speicherprogrammierbare Steuerung 120, welcher die Steuerung der technischen Betriebsmittel gegebenenfalls in Echtzeit bewirkt.

Die Automatisierungskomponenten 102 sind vorzugsweise an ein Bussystem 100, wie z.B. einen Profibus, angegliedert. Dies ermöglicht eine universelle Vernetzung mehrerer Automatisierungskomponenten 102.

Zur Bedienung und Beobachtung der Automatisierungskomponenten 102 und z.B. von deren ablaufenden Steuerungs-, Diagnose-, Alarmverarbeitungs- und Langzeitbeobachtungsprozessen ist zumindest ein mobiles Bedien- und Beobachtungsgerät 106 vorhanden. Dieses kann z.B. als ein kabelloses Hand-Held Terminal ausgeführt sein und z.B. über ein Display und eine Tastatur 116 verfügen. Weiterhin können Not-, Aus- und Quittungstaste und Schlüsselschalter vorgesehen sein. Das mobile Bedien- und Beobachtungsgerät 106 tauscht in einer berührungslosen Weise Nutzdaten über eine Funkstrecke 124 mit den Automatisierungskomponenten 102 der technischen Anlage 104 aus. Eine Bedienperson, die das Bedien- und Beobachtungsgerät 106 gebraucht, kann sich somit z.B. Messwerte von der technischen Anlage 104 auf dem Display des Bedien- und Beobachtungsgeräts 106 anzeigen lassen, bzw. Steuerbefehle über deren Tastatur 116 eingeben und diese an die Automatisierungskomponenten 102 senden.

Zur Übermittlung von z.B. Messwerten und Steuerbefehlen zwischen dem mobilen Bediengerät 106 und den Automatisierungskomponenten 102 verfügen das mobile Bediengerät 106 sowie die Automatisierungskomponenten 102 über entsprechende Datenübertragungsmodule 118, 122. Diese Datenübertragung wird vorzugsweise mit Hilfe von Radiofrequenz (RF) Signalen realisiert. Hierbei können eine Vielzahl von verschiedenen Datenübertragungsprotokollen, wie z.B. WLAN, IEEE 802.11, Ultra Wide Band (UWB) oder BlueTooth Protokolle zum Einsatz kommen.

Das mobile Bediengerät 106 verfügt zudem über ein Lokalisierungsmodul 114, das zum Senden und zum Empfangen von Radarsignalen ausgebildet ist. Die technische Anlage 104 verfügt zudem über mindestens ein Reflektormodul, welches auch als Transponder oder TAG bezeichnet wird. Vorzugsweise verfügt die Anlage über eine Reihe von Reflektormodulen oder Transpondern 108, 110, 112, die an verschiedenen Referenzpunkten an der technischen Anlage 104 angebracht sind. Die Transponder oder TAGs sind dazu ausgebildet, die vom Lokalisierungsmodul 114 ausgesendeten Radarsignale zu modulieren und zu reflektieren. Die von den Transpondern 108, 110, 112 modulierten und reflektierten Radarsignale können dann von dem Lokalisierungsmodul 114 empfangen und zur Lokalisierung des mobilen Bediengeräts 106 ausgewertet werden. Das mobile Bediengerät 106 ist somit in der Lage, eine Positions- oder Abstandsbestimmung von den Transpondern 108, 110, 112 selbsttätig durchzuführen. Die Transponder 108, 110, 112 müssen hierbei keine Signalauswertung vornehmen.

Das Lokalisierungsmodul 114 ist vorzugsweise als FMCW-Radar ausgebildet und die einzelnen Transponder 108, 110, 112 sind zur Modulation empfangener Radarsignale und zum Reflektieren daraus resultierender modulierter Radarsignale ausgebildet. Mittels einer von den Transpondern 108, 110, 112 durchgeführten Subträger-Modulation können die von den Transpondern reflektierten Radarsignale selektiv ausgewertet werden. Die Subträger-Modulation ermöglicht somit eine Trennung von Hintergrundsignalen und Signalen, die an den Transpondern reflektiert wurden. Durch eine entsprechende Subträger-Filterung im Lokalisierungsmodul 114 kann somit, mit Hilfe des FMCW-Radars, eine eindeutige Entfernungsmessung für quasistationäre Ziele sogar mit einem Empfänger der lediglich für eine reelle Signalauswerten ausgelegt ist, im Lokalisierungsmodul 114 realisiert werden. Quasistationär bedeutet in diesem Zusammenhang, dass während der Messzeit, die typischerweise im Bereich einiger ms bis einiger 10 ms liegt, sich die Position der Transponder bzw. die Position des Radarsystems nicht verändert.

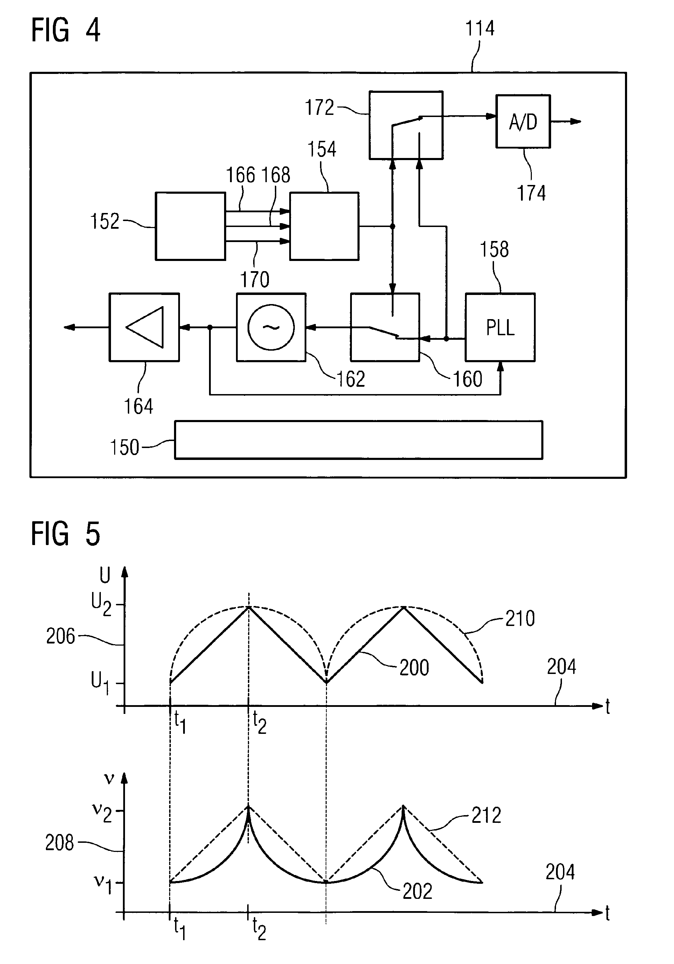

Figur 4 zeigt ein detailliertes Blockdiagramm eines im Lokalisierungsmodul 114 eines mobilen Bedien- und Beobachtungsgeräts implementierten Schaltkreises. Diese detaillierte Darstellung ist eine Erweiterung des in Figur 1 gezeigten Ausführungsbeispiels, bei dem das Treibermodul mit Hilfe eines digitalen Potentiometers 152 und einem Funktionsgenerator 154 ausgestattet ist. Zusätzlich zeigt das in Figur 4 dargestellte Blockdiagramm einen zweiten Schalter 172, einen Analog-Digital-Wandler 174 sowie mehrere Zuleitungen 166, 168, 170 vom digitalen Potentiometer zum Funktionsgenerator 154.

Die drei Zuleitungen 166, 168, 170 ermöglichen die separate Regelung der drei Parameter Rampenzeit, Minimalfrequenz und Maximalfrequenz des Ausgangssignals des VCO 162. In der gezeigten Stellung des Schalters 172 wird das vom Funktionsgenerator 154 erzeugte Signal an den Analog-Digital-Wandler 174 übermittelt, dessen Ausgang letztlich in das zentrale Kontrollmodul 150 eingespeist wird. Vorzugsweise wird bei dieser Schalterstellung im Kalibriermodus die Rampenzeit des Funktionsgenerators und somit die Rampenzeit des vom VCO 162 erzeugten linear frequenzmodulierten Signals kontrolliert und ggf. über das digitale Potentiometer 152 nachgeregelt.

In der nicht gezeigten Stellung des Schalters 172 wird der Ausgang des PLL Moduls 158 mit dem Analog-Digital-Wandler 174 verbunden. Somit können die im Kalibriermodus den VCO 162 zugeführten Spannungssignale in digitale Werte übersetzt und vom zentralen Kontrollmodul 150 ausgewertet werden. Als Ergebnis dieser Auswertung können die minimalen und maximalen Spannungswerte des Funktionsgenerators 154 mit Hilfe des zentralen Kontrollmoduls 150 über das digitale Potentiometer 152 nachgeregelt bzw. kalibriert werden.

Figur 5 zeigt ein Spannungs- und ein Frequenzdiagramm eines nichtlinear operierenden spannungskontrollierten Oszillators 162. Im oberen Diagramm ist die Eingangsspannung 206 des VCO über die Zeit 204 aufgetragen und im unteren Diagramm findet sich eine Darstellung der Frequenz 208 des Ausgangssignals gegen die Zeit 204. Wird der VCO mit einem dreieckförmigen Eingangssignal 200 angesteuert, so zeigt das Ausgangssignal 202 des Oszillators ein nichtlineares Verhalten über die Zeit 204. Zum Zeitpunkt t₁ erzeugt eine Spannung U₁, die Frequenz ν₁. Zum Zeitpunkt t₂ liegt die Spannung U₂ am VCO an und eine Frequenz ν₂ wird von diesem generiert. Die Rampenzeit ist hierbei durch die Differenz von t₂ und t₁ gegeben.

Anhand des Ausgangssignals 202 wird deutlich, dass die Frequenz im Zeitintervall t₁ bis t₂ von ν₁ nach ν₂ in einem nichtlinearen Verlauf ansteigt. Damit das Ausgangssignal des VCO ein linear modulierten Frequenzverlauf zeigt, wie etwa das Ausgangssignal 212, muss das Eingangssignal des VCO beispielsweise einen wie im Eingangssignal 210 dargestellten Verlauf aufweisen. Im Intervall t₁ bis t₂ verläuft das Eingangssignal 210 invertiert zum Signal 202, wodurch das korrespondierende Ausgangssignal 212 eine linear ansteigende Rampe aufweist.

Mit Hilfe des erfindungsgemäßen Kalibrierungsmodus kann mit dem phasengekoppelten Regelkreis jede gewünschte Frequenz zwischen ν₁ und ν₂ gezielt angesteuert werden und das dazugehörige zwischen U₁ und U₂ liegende Spannungssignal abgespeichert werden, so dass schließlich eine Sequenz von Ansteuersignalen ermittelt wird, die den Verlauf des Eingangssignals 210 entspricht. Schließlich kann mit Hilfe DA-Wandlers und des Look-Up Table im zentralen Kontrollmodul, was z.B. als Mikro-Controller ausgebildet ist, der VCO 162 mit einem dem Eingangssignal 210 ähnlichen Spannungssignal betrieben werden. Somit kann sogar ein stark nichtlineare spannungskontrollierter Oszillator zur Erzeugung eines annähernd linear frequenzmodulierten Signals genutzt werden.

## Patentansprüche

1. Elektronischer Schaltkreis zur Erzeugung eines annähernd linear frequenzmodulierten Signals für ein frequenzmodulierendes Dauerstrich Radarsystem mit
- einem Oszillatormodul (162) zur Erzeugung des annähernd linear frequenzmodulierten Signals,
- einem Treibermodul (150, 154) zur Ansteuerung des Oszillatormoduls,
- einem phasengekoppelten Regelkreis (158) zur Kalibrierung des Treibermoduls.

2. Elektronischer Schaltkreis nach Anspruch 1, wobei das Treibermodul über einen Funktionsgenerator (154) verfügt, der mittels eines regelbaren digitalen Potentiometers (152) und des Kontrollmoduls (150) über den phasengekoppelten Regelkreis (158) einstellbar ist.

3. Elektronischer Schaltkreis nach Anspruch 2, wobei das digitale Potentiometer (152) dazu ausgebildet ist, die Rampenzeit und die maximalen und minimalen Amplitudenwerte des Funktionsgenerators (154) einzustellen.

4. Elektronischer Schaltkreis nach Anspruch 1, wobei das Oszillatormodul (162) ein nichtlineares Verhalten zwischen der Amplitude eines Eingangssignals (200) und der Frequenz des Ausgangssignals (202) aufweist und das Treibermodul (150) über
- Mittel zur Ermittlung und Speicherung mindestens einer Sequenz von Ansteuersignalen für das Oszillatormodul, um am Ausgang des Oszillatormoduls das annähernd linear frequenzmodulierte Signal zu erzeugen,
- Mittel zum Ansteuern des Oszillatormoduls mit der mindestens einen Sequenz von Ansteuersignalen verfügt.

5. Elektronischer Schaltkreis nach Anspruch 4, wobei die Mittel zur Speicherung der mindestens einen Sequenz von Ansteuersignalen als digitales Speichermedium (182) ausgebildet sind und das Treibermodul über Mittel zur Analog-DigitalWandlung (184) und Digital-Analog-Wandlung (180) verfügt

6. Elektronischer Schaltkreis nach einem der Ansprüche 1 bis 5, bei dem der phasengekoppelte Regelkreis (158) zu einer ersten Kalibrierung vor Inbetriebnahme des elektronischen Schaltkreises oder zu einer zeitweiligen Nachregelung des Treibermoduls (150, 154) im laufenden Betrieb vorgesehen ist.

7. Elektronischer Schaltkreis nach einem der Ansprüche 1 bis 6, mit mindestens einem Schaltelement (160), welches zum Umschalten des elektronischen Schaltkreises zwischen einem normalen Betriebmodus und einem Kalibrierungsmodus ausgebildet ist.

8. Mobiles Bedien- und Beobachtungsgerät (106) für die Automatisierungskomponenten (102) einer technischen Anlage (104) mit einem frequenzmodulierenden Dauerstrich Radarsystem zur Lokalisierung des mobilen Bedien- und Beobachtungsgeräts, wobei das frequenzmodulierenden Dauerstrich Radarsystem mit
- einem Oszillatormodul (162) zur Erzeugung eines annähernd linear frequenzmodulierten Signals,
- einem Treibermodul (150, 154) zur Ansteuerung des Oszillatormoduls,
- einem phasengekoppelten Regelkreis (158) zur Kalibrierung des Treibermoduls
ausgestattet ist.

9. Mobiles Bedien- und Beobachtungsgerät (106) nach Anspruch 8, wobei das Treibermodul über einen Funktionsgenerator (154) verfügt, der mittels eines regelbaren digitalen Potentiometers (152) und des Kontrollmoduls (150) über den phasengekoppelten Regelkreis (158) einstellbar ist und das digitale Potentiometer dazu ausgebildet ist, die Rampenzeit und die maximalen und minimalen Amplitudenwerte des Funktionsgenerators einzustellen.

10. Mobiles Bedien- und Beobachtungsgerät (106) nach Anspruch 8, wobei das Oszillatormodul (162) ein nichtlineares Verhalten zwischen der Amplitude eines Eingangssignals (200) und der Frequenz des Ausgangssignals (202) aufweist und das Treibermodul (150)über
- Mittel zur Ermittlung und Speicherung mindestens einer Sequenz von Ansteuersignalen für das Oszillatormodul, um am Ausgang des Oszillatormoduls ein annähernd linear frequenzmoduliertes Signals zu erzeugen,
- Mittel zum Ansteuern des Oszillatormoduls mit der mindestens einen Sequenz von Ansteuersignalen verfügt.

11. Mobiles Bedien- und Beobachtungsgerät (106) nach einem der Ansprüche 8 bis 10, mit
- Mitteln zur berührungslosen Datenübertragung zwischen dem mobilen Bedien- und Beobachtungsgerät (106) und den Automatisierungskomponenten (102),
- Auswertemitteln zur Verwaltung eines aktiven Bedienbereichs, welche die Automatisierungskomponenten für sicherheitsrelevante Bedienungen der technischen Anlage über das mobile Bedien- und Beobachtungsgerät nur dann aktivieren, wenn das Radarsystem detektiert, dass sich das mobile Bedien- und Beobachtungsgerät innerhalb des aktiven Bereichs befindet.

12. HMI System mit zumindest einem mobilen Bedien- und Beobachtungsgerät (106) für die Automatisierungskomponenten (102) einer technischen Anlage (104) und mit einem frequenzmodulierenden Dauerstrich Radarsystem zur Lokalisierung des mobilen Bedien- und Beobachtungsgeräts, wobei das frequenzmodulierenden Dauerstrich Radarsystem mit
- einem Oszillatormodul (162) zur Erzeugung eines annähernd linear frequenzmodulierten Signals,
- einem Treibermodul (154, 150) zur Ansteuerung des Oszillatormoduls,
- einem phasengekoppelten Regelkreis (158) zur Kalibrierung des Treibermoduls
ausgestattet ist.
